# EUROPEAN PATENT APPLICATION

(11) **EP 4 266 226 A1**
(43) Date of publication of application: **25.10.2023**
(21) Application number: 23168572.8
(22) Date of filing: 18.04.2023
(51) Int. Cl.: G06Q 10/0631

(54) **METHODS AND APPARATUS FOR NATURAL LANGUAGE PROCESSING AND REINFORCEMENT LEARNING TO INCREASE DATA ANALYSIS AND EFFICIENCY**

(30) Priority: 18.04.2022 US 202263332064 P
(71) Applicant: Indiggo LLC., Bethesda MD 20814 (US)
(72) Inventor: PERINCHERRY, Vijay, Potomac, 20854 (US); GELBART, Janine, Bethesda, 20814 (US); INZELSTEIN, Marc, Rockville, 20852 (US)
(74) Representative: Cooley (UK) LLP

(57) **Abstract**

In some embodiments, a method includes, defining, using a reinforcement learning model trained to increase a reward specific to an overall strategy of an entity, an engagement plan for a user and providing engagement data from digital artifacts associated with the user as an input to a TF-IDF NLP model to identify a context associated with each term in the engagement data. The method includes assigning a focus area score for each digital artifact based on the context and calculating, for each focus area and based on a level of association of each digital artifact with that focus area, an engagement score for the user and comparing the engagement score for the user to the engagement plan for the user to identify inconsistencies. The method includes defining, based on the inconsistencies, a specific action for the user to reduce the inconsistencies and sending a signal to implement the specific action.

## Description

### Cross-Reference to Related Applications

This application claims priority to, and the benefit of, U.S. Provisional Patent Application Number 63/332,064, filed April 18, 2022, and titled "A SYSTEM, METHODOLOGY AND FRAMEWOORK TO IMPLEMENT ASYMMETRIC LEADERSHIP FOCUS AND ACTION AT SCALE TO ΠVIPROVE EXECUTION EFFECTIVENESS IN ORGANIZATIONS," the entire contents of which are incorporated by reference herein.

### Background

Obtaining, tracking, and analyzing data indicative of efficient use of time and resources can be difficult. Some known ways to obtain and track use of time and resources include selfreporting, which can be incorrect and biased. Moreover, it can be difficult for an entity to correlate such self-reported data to an overall purpose and/or direction of the entity.

Accordingly, a need exists for machine learning models to automatically collect and analyze data of a user to identify an actual focus areas of a user. Moreover, a need exists for machine learning models and systems to automatically define focus areas for users and identify any inconsistencies between a planned focus area and an actual focus area of a user.

### Summary

In some embodiments, a method includes, defining, using a reinforcement learning model trained to increase a reward specific to an overall strategy of an entity, an engagement plan for a user and providing engagement data from digital artifacts associated with the user as an input to a TF-IDF NLP model to identify a context associated with each term in the engagement data. The method includes assigning a focus area score for each digital artifact based on the context and calculating, for each focus area and based on a level of association of each digital artifact with that focus area, an engagement score for the user and comparing the engagement score for the user to the engagement plan for the user to identify inconsistencies. The method includes defining, based on the inconsistencies, a specific action for the user to reduce the inconsistencies and sending a signal to implement the specific action.

### Brief Description of the Drawings

FIG. 1 shows a block diagram of a system for efficient data analysis to improve operational efficiency, according to an embodiment.
FIG. 2 shows a workflow for efficient data analysis to improve operational efficiency, according to an embodiment.
FIG. 3 shows a method for defining user actions based on engagement, according to an embodiment.
FIG. 4 shows an example of user interface for generating alerts and triggers, according to an embodiment.
FIG. 5 shows an example of a personalized recommend action interface, according to an embodiment.

### Detailed Description

In some implementations, a reinforcement leaning model is used to define an engagement plan for at least one user associated with an entity. The engagement plan is associated with the at least one user's past engagement with the entity. A term frequency-inverse document frequency (TF-IDF) processing model is used to identify a context associated with a plurality of terms in engagement data from a plurality of digital artifacts associated with the user. A focus area score for each digital artifact is assigned. The focus area score indicates a level of association of that digital artifact with each focus area from a plurality of focus areas. An engagement score can then be calculated for the user. The engagement score is compared to the engagement pan to identify inconsistencies. Based on the inconsistencies, specific actions for the user are defined. A signal is then sent to a compute device of the user to implement the specific actions.

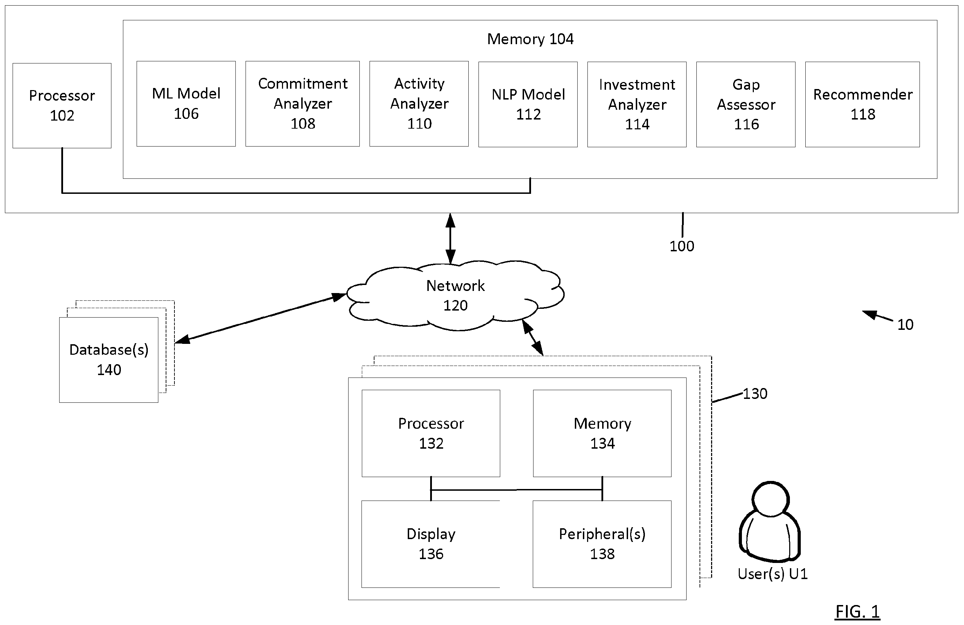

FIG. 1 shows a block diagram of a system 10 for processing data to improve operational efficiency, according to an embodiment. The system 10 can include an engagement system 100, a network 120, user compute device(s) 130, and database(s) 140. The system 10 can be associated with an entity including and/or associated with user(s) U1.

The network 120 facilitates communication between the components of the system 10. The network 120 can be any suitable communication network for transferring data, operating over public and/or private networks. For example, the network 120 can include a private network, a Virtual Private Network (VPN), a Multiprotocol Label Switching (MPLS) circuit, the Internet, an intranet, a local area network (LAN), a wide area network (WAN), a metropolitan area network (MAN), a worldwide interoperability for microwave access network (WiMAX^{®}), an optical fiber (or fiber optic)-based network, a Bluetooth^{®} network, a virtual network, and/or any combination thereof. In some instances, the network 120 can be a wireless network such as, for example, a Wi-Fi or wireless local area network ("WLAN"), a wireless wide area network ("WWAN"), and/or a cellular network. In some instances, the network 120 can be a wired network such as, for example, an Ethernet network, a digital subscription line ("DSL") network, a broadband network, and/or a fiber-optic network. In some instances, the network can use Application Programming Interfaces (APIs) and/or data interchange formats, (e.g., Representational State Transfer (REST), JavaScript Object Notation (JSON), Extensible Markup Language (XML), Simple Object Access Protocol (SOAP), and/or Java Message Service (JMS). The communications sent via the network 120 can be encrypted or unencrypted. In some instances, the network 120 can include multiple networks or subnetworks operatively coupled to one another by, for example, network bridges, routers, switches, gateways and/or the like (not shown).

The user compute device(s) 130 can be for example, a device configured to generate, view, and/or complete actions by at least one of the user(s) U1. In some implementations, the system 10 includes a plurality of user compute devices 130. In some implementations, each user compute device 130 from the plurality of user compute devices 130 is associated with one or more of the user(s) U1. The user compute device(s) 130 can each include a processor 132, memory 134, display 136, and peripheral(s) 138, each operatively coupled to one another (e.g., via a system bus). In some implementations, the user compute device(s) 130 is associated with (e.g., owned by, accessible by, operated by, etc.) the user(s) U1. The user(s) U1 can be any type of user, such as, for example, an administrator, a manager, an employee, a customer, an operator, and/or the like.

The processor 132 of the user compute device(s) 130 can be, for example, a hardware based integrated circuit (IC), or any other suitable processing device configured to run and/or execute a set of instructions or code. For example, the processor 132 can be a general-purpose processor, a central processing unit (CPU), an accelerated processing unit (APU), an application specific integrated circuit (ASIC), a field programmable gate array (FPGA), a programmable logic array (PLA), a complex programmable logic device (CPLD), a programmable logic controller (PLC) and/or the like. The processor 132 can be operatively coupled to the memory 134 through a system bus (for example, address bus, data bus and/or control bus).

The memory 134 of the user compute device(s) 134 can be, for example, a random-access memory (RAM), a memory buffer, a hard drive, a read-only memory (ROM), an erasable programmable read-only memory (EPROM), and/or the like. In some instances, the memory 134 can store, for example, one or more software programs and/or code that can include instructions to cause the processor 132 to perform one or more processes, functions, and/or the like. In some implementations, the memory 134 can include extendable storage units that can be added and used incrementally. In some implementations, the memory 134 can be a portable memory (e.g., a flash drive, a portable hard disk, and/or the like) that can be operatively coupled to the processor 132. In some instances, the memory 134 can be remotely operatively coupled with a compute device (not shown). For example, a remote database device can serve as a memory and be operatively coupled to the compute device.

The peripheral(s) 138 can include any type of peripheral, such as an input device, an output device, a mouse, keyboard, microphone, touch screen, speaker, scanner, headset, printer, camera, and/or the like. In some instances, the user U1 can use the peripheral(s) 138 to input activity information. For example, the user U1 can generate activity logs using a keyboard included in peripheral(s) 138 to indicate engagement and/or to select a recommended activity using a mouse included in peripherals(s) 138.

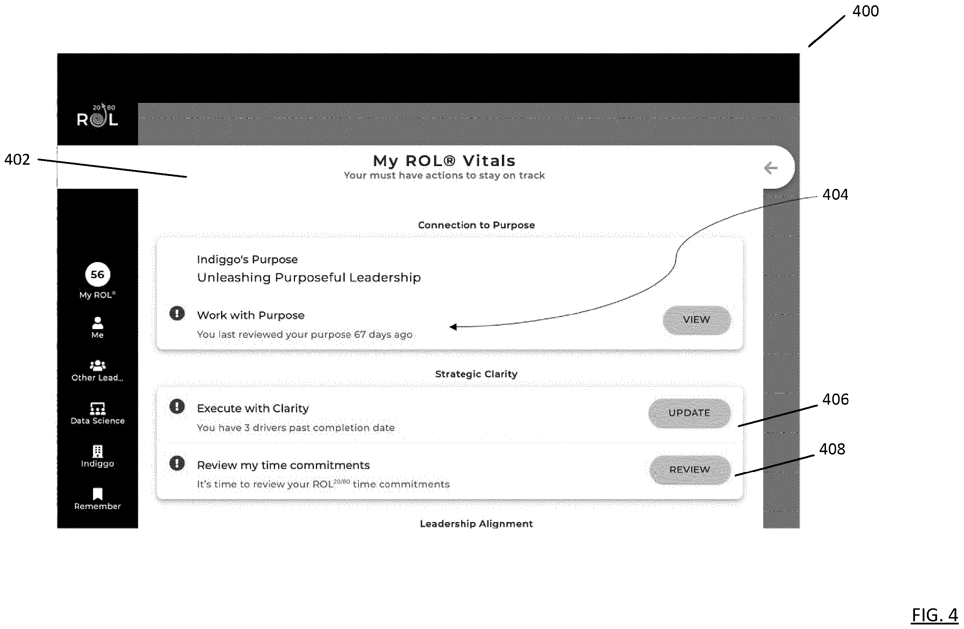

The display 136 can be any type of display, such as a Cathode Ray tube (CRT) display, Liquid Crystal Display (LCD), Light Emitting Diode (LED) display, Organic Light Emitting Diode (OLED) display, and/or the like. The display 136 can be used for visually displaying information (e.g., recommended actions, etc.) to user U1. For example, display 136 can display a result of generating action recommendations, and an engagement score. Example outputs that can be displayed by the display 136 are shown in FIGS. 4-5, which are described in further detail herein.

The database(s) 140 store information related to the system 10 and the processes described herein. For example, the database(s) 140 can store organizational strategy information, change logs, change triggers, digital calendars, communications, activity reports, direct engagement information, digital artifacts (e.g., email messages, calendar appointments, documents, text messages, reports, etc.) and similar information. The database(s) 140 can be any device or service configured to store signals, information, and/or data (e.g., hard-drive, server, cloud storage service, etc.). The database(s) 140 can receive and store signals, information and/or data from the other components (e.g., the user compute device 130 and the command executing system 100) of the system 10. The database(s) 140 can include a local storage system associated with the engagement system 100, such as a server, a hard-drive, or the like or a cloud-based storage system. In some implementations, the database(s) 140 can include a combination of local storage systems and cloud-based storage systems. In some implementations, the database(s) 140 include different databases for storing different information. For example, the database(s) can include a database for storing information used to determine an engagement plan and a database for storing information used to determine an engagement score. In some implementations, the database(s) can include information associated with multiple entities and/or user(s) U1.

The engagement system 100 is configured to receive inputs to generate and compare an engagement plan associated with an entity and an engagement score associated with the user(s) U1. The engagement system 100, based on the comparison of the engagement plan and the engagement score can be used to generate recommended actions for the user(s) U1. The engagement system 100 can include a processor 102 and a memory 104, each operatively coupled to one another (e.g., via a system bus). The memory 104 can include a machine learning (ML) model 106, a commitment analyzer 108, an activity analyzer 110, a natural-language processing (NLP) model 112, an investment analyzer 114, a gap assessor 116, and a recommender 118. In some implementations, the user compute device(s) 130 are associated with (e.g., owned by, accessible by, operated by, etc.) a user or set of user(s) U1 of an entity, and the engagement system 100 is associated with (e.g., owned by, accessible by, operated by, etc.) the entity. In some implementations, the user compute device(s) 130 are associated with (e.g., owned by, accessible by, operated by, etc.) a first organization, and the generating system 100 is associated with (e.g., owned by, accessible by, operated by, etc.) a second organization different than the first organization. For example, the first organization may include an entity and the second organization may include a consulting group or the like.

The memory 104 of the of the command executing system 100 can be, for example, a random-access memory (RAM), a memory buffer, a hard drive, a read-only memory (ROM), an erasable programmable read-only memory (EPROM), and/or the like. In some instances, the memory 104 can store, for example, one or more software programs and/or code that can include instructions to cause the processor 102 to perform one or more processes, functions, and/or the like. In some implementations, the memory 104 can include extendable storage units that can be added and used incrementally. In some implementations, the memory 104 can be a portable memory (for example, a flash drive, a portable hard disk, and/or the like) that can be operatively coupled to the processor 102. In some instances, the memory 104 can be remotely operatively coupled with a compute device (not shown). For example, a remote database device can serve as a memory and be operatively coupled to the compute device.

The engagement system 100 can receive entity information (e.g., entity strategy information, entity change signals, user changes, etc.) and user information (e.g., digital calendars, communications, activity reports, direct engagement information, etc.) from the user device(s) 130 and/or the database(s) 140 via the network 120. In some implementations, the engagement system 100 can automatically receive entity information and user information. In some implementations, the engagement system 100 can send a request to receive entity information and user information. In some implementations, the engagement system 100 can continuously, periodically, or sporadically monitor the database(s) 140 and/or the use compute device(s) for changes in entity information and user information. In some implementations, the engagement system 100 normalizes entity information and/or user information into a standard format. In some implementations, the engagement system 100 generates the entity information and/or user information based raw data from the database(s) 140 and/or the user compute device(s) 130.

The ML model 106 is a first machine learning model configured to define an engagement plan for the user(s) U1. The engagement plan is associated to an overall strategy of an entity. For example, the engagement plan can be a list of tasks and/or a schedule the user(s) U1 should complete. For another example, the engagement plan can be a plan indicating a percentage of time and/or effort each user(s) U1 should spend on certain activities and/or focus areas. For example, an engagement plan for a user can instruct a user to spend 50% of their time and/or effort on a first focus area, 20% of their time and/or effort on a second focus area, 20% of their time and/or effort on a third focus area and 30% of their time and/or effort on a fourth focus area. In some implementations, for example, the ML model 106 uses descriptions and/or labels associated with individual activities, events, and/or other allocations of resources and maps each allocation to a corresponding focus area. In some implementations, a focus area can, for example, correspond to work on a framework for data validation including structure and schedule for data validation and verification and test plans and reports. In some implementations, for example, a focus area can correspond to customer onboarding process design including engagement flow design and quality control coordination. In some implementations, for example, a focus area can correspond to preparation for investor due diligence including preparing financial projections, updating documentation, and setting up data rooms. In some implementations, any other suitable focus area can be used.

In some implementations, the ML model 106 can be, for example, a reinforcement learning model, a neural network, a decision tree, a random forest and/or the like. In some implementations, the ML model 106 is a reinforcement learning model configured to maximize and/or increase a reward (e.g., to achieve the engagement plan of the user and/or the overall strategy of the entity). The ML model 106 receives past engagement information associated with past engagement of the user(s) U1 with the entity (e.g., from database(s) 140, user compute device(s) 130, a survey and/or conversation with the user, investment analyzer 114, gap assessor 116, recommender 118). The ML model 106 is trained to increase a reward specific to an overall strategy of the entity. For example, the reward can be a measurement of efficiency, cost, time, etc. and the ML model 106 (e.g., a reinforcement learning model) can work to improve and/or optimize a path and/or plan for each user to collectively improve and/or maximize the overall strategy of the entity. In some implementations, a user engagement plan for a user U1 can be based on user specific criteria as well as the overall strategy of the entity. For example, the user engagement plan for a user U1 can be based on the strengths of the user U1, an availability of the user U1, a location of a user U1, relationships of the user U1, and/or the like. In some implementations, the ML model 106 receives triggers indicating a change in an entity strategy, plan, or the like. The triggers can include, in some implementations, organizational strategy shifts, macroscopic organizational changes, user changes, and/or the like. Such triggers can be used to retrain the ML model 106 and accordingly update the engagement plan for each of user(s) U1. In some implementations, the ML model 106 can receive an engagement score from the gap assessor 116 and use the engagement score to further train the ML model 106.

In some implementations, the ML model 106 includes a conversational artificial intelligence (AI) to aid in identifying and defining an entity's purpose and/or strategy, past focus areas associated with users, user goals, changes in an entity's purpose and/or strategy, changes in user behavior and/or focus areas, and/or the like. The conversational AI can trigger based on deviations and/or changes in organizational strategy. The conversational AI can receive inputs from one or more users associated with focus areas. In some implementations, the inputs can include information associated with the focus areas such as completion dates, deadlines, meaning, etc. For example, the conversational AI can provide prompts to one or more users to obtain information and can user the one or more inputs to define the engagement plan for the user. In some implementations, the conversational AI can rank the focus areas based on the inputs and an output can include and/or be associated with a priority ranking of focus areas for the entity and/or can be used to define an engagement plan for the user. The conversational AI can, based on the ranking, generate a strategy vector that can be improved and/or optimized to maximize and/or increase a reward.

The commitment analyzer 108 is configured to receive the engagement plan for the user(s) U1 from the ML model 106 and determine commitment information associated with the engagement plan. For example, the engagement plan can be organized into focus areas. The focus areas can be associated with business groups of an entity, roles of the user(s) U1, or groups of user(s) U1. In some implementations, the focus areas are automatically determined, predetermined, or provided by a user (e.g., manager). The commitment analyzer 108 enriches the engagement plan with additional information based on the focus areas. For example, the commitment analyzer 108 can assign a commitment level to the engagement plan. The commitment level can be associated with a desired number of user(s) U1, time to complete, estimated effort to complete, estimated best path and/or plan to complete, skills needed to complete, and/or another value. For example, it may be desirable for a first focus area to have two people work on the first focus area for a half hour and it may be desirable for a second focus area to have one person work on the second focus area for an hour. Additionally, the commitment analyzer 108 can determine a desired work schedule including actions, action times, action types, meetings, skills, etc.

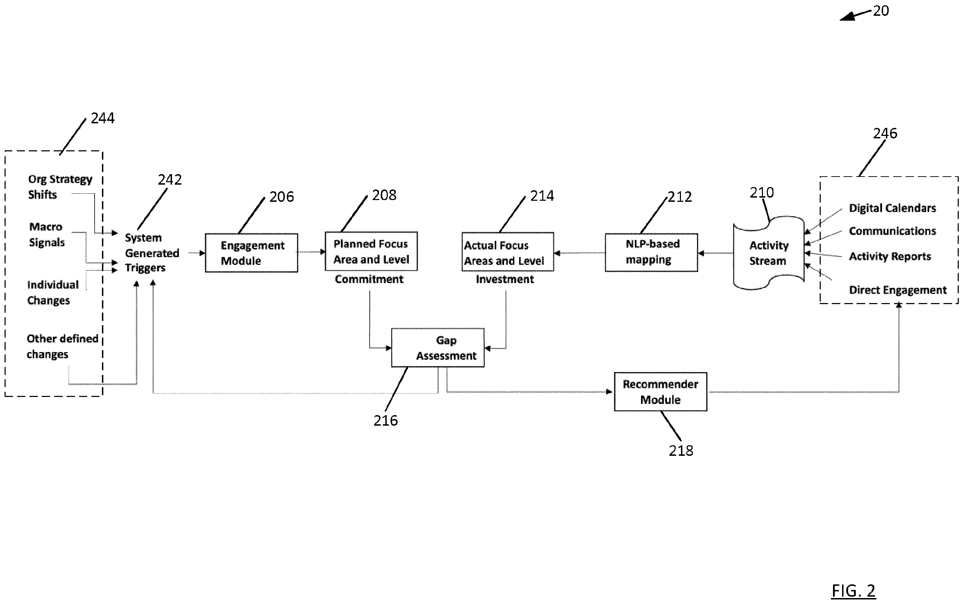

The activity analyzer 110 is configured to receive the user(s) U1 digital artifacts (e.g., email messages, calendar appointments, documents, text messages, reports, etc.). The digital artifacts can indicate the productivity and/or general behavior of the user(s) U1. The activity stream 210 (as shown in FIG. 2 and described in further detail herein) can be configured to receive the digital artifacts continuously, periodically, or sporadically. For example, the activity stream 210 can monitor the user compute device 130 of a user U1 and/or other computing systems associated with the entity (e.g., document servers, time management servers, customer relationship management (CRM) servers, etc.) for relevant activity by the user and can automatically receive calendar information (e.g., information about schedule and/or meetings attended), email information (e.g., emails sent and/or received on specific topics and/or with specific individuals), time entry information (e.g., information on time spent on different projects and/or working for different clients), phone information (e.g., information on phone calls and/or voice messages), document information (e.g., documents user has worked on and time spent working on specific documents), meeting information (e.g., time spent meeting on specific topics and/or with specific people), reports (e.g., performance reviews given and received) and/or the like. In some implementations, the activity stream 210 can generate a pull request for receiving additional digital artifacts. The activity stream 210 is also configured to receive recommendations generated by the recommender 118. The activity stream 210 can determine the process and/or status (e.g., completed, uncompleted, delayed, etc.) of the digital artifacts. In some implementations, the activity stream 210 can sort, filter, and/or process the digital artifacts based on as predetermined rule set. The activity analyzer 110 is configured to generate/filter out engagement data from the digital artifacts. The engagement data is associated with how the user(s) U1 engage with focus areas.

The NLP model 112 is a second machine learning model configured to receive the engagement data. While shown in FIG. 1 as an NLP model, in some implementations, the second machine learning model is any suitable type of language processing machine learning model. The NLP model 112 can then identify a context associated each term from a plurality of terms in the engagement data. In some implementations, the NLP model 112 includes a term-frequency - inverse document frequency (TF-IDF) NLP model. In some implementations, the TF-IDF NLP model is trained using a corpus specific to the user(s) U1. In some implementations, the TF-IDF NLP model uses word embedding to identify related terms from the plurality of terms in the engagement data. In some implementations, the NLP model 112 can include any type of machine learning algorithm. In some embodiments, each user of the user(s) U1 has an associated NLP model 112. The NLP model 112 generates a mapping associated with the user(s) U1. In some implementations, the NLP model 112 can be continuously and/or periodically trained during operation. For example, the NLP model 112 can receive feedback associated with the focus area score for each digital artifact. The NLP model 112 can then be trained based on the feedback. The NLP model 112 can analyze the engagement data to identify various terms used in the engagement data and based on the prominence and/or importance of that term in the engagement data (e.g., identified using TF-IDF) and based on past use of that term by that specific user, can identify a context associated with each term from the terms in the engagement data. This context can be associated with predetermined focus areas. For example, certain terms can provide an indication of certain focus areas.

The investment analyzer 114 is configured to receive the output of the NLP model 112 and determine investment information. The investment information can include focus areas and how the user(s) U1 invest their time. For example, the investment information can include how long the user(s) U1 spent on a focus area, productivity, time not working, meeting duration, meeting effectiveness, and/or the like. The investment analyzer 114 assigns a focus area score for each digital artifact based on the context determined by the NLP model 112. The focus areas scores indicate a level of association of the digital artifact with each focus area. The investment analyzer 114 then calculates an engagement score based on the level of association of each digital artifact with the focus area. The engagement score can be calculated for each focus area to determine the user(s) U1 investment in that focus area. For example, each digital artifact associated with a user can be assigned one or more focus areas. In some implementations, each digital artifact can be assigned a single focus area (e.g., the terms associated with the digital artifact are mostly associated with a specific focus area, so that specific focus area is assigned to that digital artifact). In some implementations, each digital artifact can be assigned to multiple focus areas by, for example, a percent relevance. For example, a digital artifact could be determined (based on the terms associated with the digital artifact) to be 60% associated with a first focus area, 25% associated with a second focus area and 15% associated with a third focus area.

Based on the percentages associated with each digital artifact for a user, the investment analyzer 114 can identify and/or calculate an engagement score indicating where the user focuses (e.g., expends their time and/or effort). In some implementations, the engagement score can be a single score. In some implementations, the engagement score can be percentages, or other scores associated with focus areas. For example, a user can be determined to spend 40% of their time and/or effort on a first focus area, 20% of their time and/or effort on a second focus area, 10% of their time and/or effort on a third focus area and 30% of their time and/or effort on a fourth focus area.

The gap assessor 116 is configured to receive and compare the engagement plan and the engagement score to identify inconsistencies. The inconsistencies can indicate that the user(s) U1 are not acting in a manner that does not align with the engagement plan. The inconsistencies can indicate that the user(s) U1 are not utilizing time and/or resources in a manner that increases the rewards specific to the overall strategy of an entity. For example, the inconsistencies may indicate that the user(s) U1 aren't utilizing time between activities, spending too much time between meetings, scheduling/attending useless meeting, spending too much time and/or effort on certain focus areas and/or too little time and/or effort on other focus areas, and/or the like. In some embodiments, the intensity of the inconsistencies can be quantified into an efficiency or effectiveness score. In some implementations, the effectiveness score can be a single score. In some implementations, the effectiveness score can be multiple differences of percentages. For example, if the engagement plan is for the user to spend 20% time and/or effort on a given focus area and the user is spending 50% time and/or effort on that focus area, the effectiveness score for that focus area can be +30%. Effectiveness scores for other focus areas can be similarly calculated. The effectiveness score can be utilized by the entity to determine the effectiveness of the user(s) U1. The differences between the engagement plan and the engagement score can be input into the ML model 106 to further train the ML model 106.

The recommender 108 is configured to determine one or more recommended actions for the user(s) U1 based on the inconsistencies between the engagement plan and the engagement score. The one or more recommended actions can correspond to recommendations for the user(s) U1 on how to manage time, schedule meetings, plan actions, plan workload, manage time, etc. The recommender 108 can send a signal to the user compute device(s) 130 that instructs the user(s) U1 to implement the one or more recommended actions and/or that automatically schedules one or more actions in the user's calendar (e.g., schedules a meeting, schedules time for a specific task, provides a reminder to contact a specific individual, etc.). In some embodiments, the system 10 can be used to influence the behavior of a single user or can be applied for a group of users associated with the entity. In some implementations, the system 10 can be applied for an entire entity.

FIG. 2 shows a workflow 20 for processing data to improve operational efficiency. In some implementation, the workflow 20 can be completed by a system, such as the system 10 of FIG. 1. The workflow 20 can be stored on one or more memories and/or executed on one more processors. For example, the processes described in reference to FIG. 2 can be executed by the one or more processors 102 of FIG. 1 while the instructions for can be stored on the one or more memories 104 of FIG. 1. The workflow 20 includes an engagement module 206 (e.g., structurally and/or functionally similar to the ML model 106 of FIG. 1), a commitment analyzer 208 (e.g., structurally and/or functionally similar to the commitment analyzer 108 of FIG. 1), an activity stream 210 (e.g., structurally and/or functionally similar to the activity analyzer 110 of FIG. 1), an NLP-based mapping 212 (e.g., structurally and/or functionally similar to the NLP model 112 of FIG. 1), an investment analyzer 214 (e.g., structurally and/or functionally similar to the investment analyzer 114 of FIG. 1), a gap assessment 216 (e.g., structurally and/or functionally similar to the gap assessor 116 of FIG. 1), and a recommender module 218 (e.g., structurally and/or functionally similar to the recommender 117 of FIG. 1).

The engagement module 206 receives a system generated triggers 242. The trigger package can include triggers 244 corresponding to changes associated with the entity such as organization strategy changes, macroscopic entity changes, changes related to individuals associated with the entity, and/or the like. In some implementations, the triggers 244 can be generated by the system in response to a change being detected. In some implementations, the system generated triggers 242 includes inconsistencies identified by the gap assessors 216. In some implementations, the system generated triggers 242 is sent to the ML model continuously, periodically, or sporadically. In some implementations, the system generated triggers 242 is only sent to the engagement module 206 when the engagement module 206 requests a system generated triggers 242. The engagement module 206 defines an engagement plan based on the triggers 244 in the system generated triggers 242. The engagement module 206 is trained to increase a reward specific to an overall strategy of the entity. The goal associated with the engagement plan can correspond to monetary savings, time saving, efficiency, etc. For example, the engagement plan can correspond to an engagement plan that would increase the efficiency of users associated with the entity.

The commitment analyzer 208 receives the engagement plan from the engagement module 206 and determines a commitment level associated with the engagement plan. For example, the commitment analyzer 208 can determine focus areas and/or assign commitment information to focus areas for each user associated with an entity. The commitment information can include time, activity type, number of users, and/or the like needed to complete a certain activity or group of activities associated with a focus area. In some implementations, the commitment analyzer 208 enriches the engagement plan with the commitment information.

The activity stream 210 receives digital artifacts 246. The digital artifacts 246 include information associated with at least one user, such as calendar information, communications, activity reports, direct engagement, and/or the like. The digital artifacts 246 can include recommendations from the recommender module 218. The activity stream 210 can pull engagement data form the digital artifacts 246. The engagement data can be associated with the behaviors of the at least one user.

The NLP-based mapping 212 receives the engagement data and inputs the engagement data into an NLP model to identity a context associated with each term in the engagement data. In some implementations, the NLP-based mapping 212 uses word embedding to identify related terms. In some implementations, the NLP-based mapping 212 is specific to a user and is trained using a corpus of the user (e.g., terms and phrases used by that specific user). The NLP-based mapping 212 can learn a user's specific language and behavioral patterns to create a context of user behavior for a period of time. In some implementations, the context can include focus areas.

The investment analyzer 214 receives the context and the engagement data and assigns focus area scores for each digital artifact based on the context associated with each term associated with a corresponding digital artifact. Each focus area score indicates a level of association of the corresponding digital artifact with the focus area. Based on the focus area scores of the focus areas, an engagement score can be calculated for the at least one user. The output of the investment analyzer 214 can be associated with the past behavior of the at least one user in a format that can be compared to the engagement plan.

The gap assessment 216 receives the engagement plan and the engagement score and compares the engagement plan and the engagement score to identify inconsistencies. The inconsistencies can correspond to behaviors the at least one user is and/or is not doing that do not increase the reward specific to the overall strategy of the entity. The inconsistencies can be sent to the engagement module 206 as part of the system generated triggers 242 to further train the engagement module 206. Based on the inconsistencies, the recommender module 218 can define at least one recommended action for the at least one user. The at least one recommended action corresponding to specific action(s) that, if implemented by the user, can reduce the inconsistencies. The recommender module 218 can send a signal to user to implement the specific action(s). In some implementations, the recommender module 218 sends the at least one recommended action to be added to the digital artifacts 246.

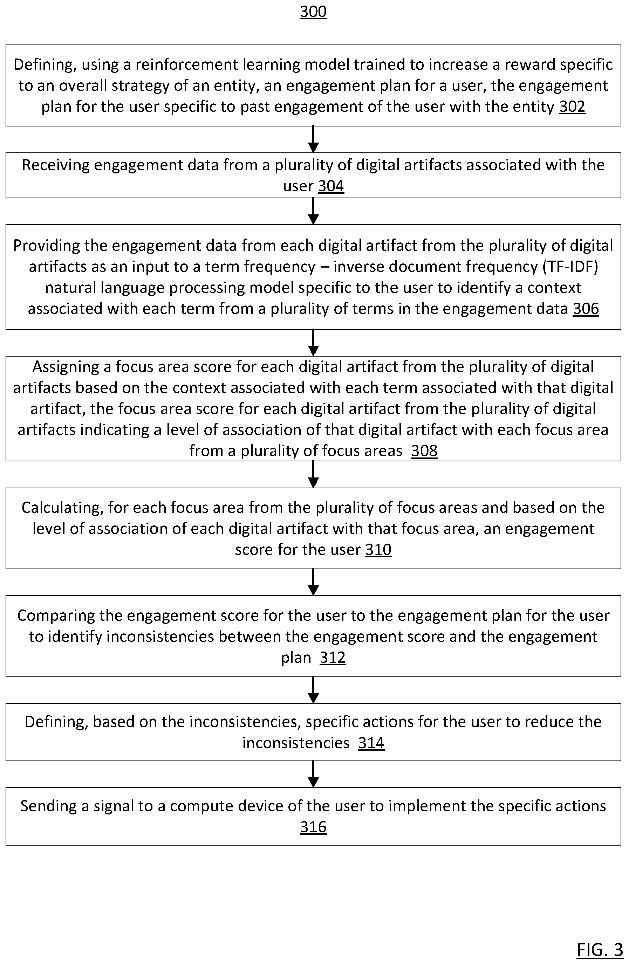

FIG. 3 shows a method 300 for defining user actions based on engagement, according to an embodiment. The method 300 can be executed by a system such as the system 100 of FIG. 1. The method 300 includes defining, using a reinforcement learning model trained to increase a reward specific to an overall strategy of an entity, an engagement plan for a user, the engagement plan for the user is specific to past engagement of the user with the entity, at 302; receiving engagement data from a plurality of digital artifacts associated with the user, at 304; providing the engagement data from each digital artifact from the plurality of digital artifacts as an input to a term frequency - inverse document frequency (TF-IDF) natural language processing (NLP) model specific to the user to identify a context associated with each term from a plurality of terms in the engagement data, at 306; assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas, at 308; calculating, for each focus area from the plurality of focus areas and based on the level of association of each digital artifact with that focus area, an engagement score for the user, at 310; comparing the engagement score for the user to the engagement plan for the user to identify inconsistencies between the engagement score and the engagement plan, at 312; defining, based on the inconsistencies, a specific action for the user to reduce the inconsistencies, at 314; and sending a signal to a compute device of the user to implement the specific action, at 316.

At 302, the method 300 includes defining, using a reinforcement learning model trained to increase a reward specific to an overall strategy of an entity, an engagement plan for a user, the engagement plan for the user specific to past engagement of the user with the entity. In some implementations, 302 includes defining an engagement plan for each user from a plurality of users associated with the entity. In some implementations, the engagement plan for each user is specific to past engagement of the user with the entity. In some implementations, the method 300 includes receiving an indication of an updated overall strategy of the entity. The method 300 can further include further training the reinforcement learning model based on the updated overall strategy of the entity to define an updated reinforcement learning model. Using the updated reinforcement learning module, the method 300 can further include defining an updated engagement plan for each user such that the updated engagement plan supports the updated overall strategy of the entity. In some implementations, the method 300 may utilize a machine learning model other than a reinforcement learning model, at 302.

At 304, the method 300 includes receiving engagement data form a plurality of digital artifacts associated with the user. In some implementations, the plurality of digital artifacts includes at least one of an email message, a calendar appointment, a document, a text message, a report, and/or the like. The engagement data can be associated with the behavior of the user and the user's interactions with the entity. In some implementations, the digital artifacts can be associated with each user of the plurality of users associated with the entity.

At 306, the method 300 includes providing the engagement data from each digital artifact from the plurality of digital artifacts as an input to a term frequency - inverse document frequency (TF-IDF) natural language processing (NLP) model specific to the user to identify a context associated with each term from a plurality of terms in the engagement data. In some implementations, the engagement data is provided to a different machine learning model from a plurality of machine learning models, each of the plurality of machine learning models associated with a different user from the plurality of users associated with the entity. In some implementations, each machine learning model from the plurality of machine learning models is a term frequency - inverse document frequency (TF-IDF) natural language processing (NLP) model specific to a user from the plurality of users. In some implementations, the TF-IDF NLP model is trained using a corpus specific to the user or to each user from the plurality of users. In some implementations, the TF-IDF NLP model uses word embedding to identify related terms from the plurality of terms in the engagement data, the context of each term from the plurality of terms being defined using each term from the plurality of terms and related terms of that term. In some implementations, a machine learning model other than a TF-IDF NLP model can be used by the method 300 at 306.

At 308, the method 300 includes assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas. In some implementations, the method 300 includes receiving, from the user, feedback regarding the focus area score for each digital artifact from the plurality of digital artifacts and training the TF-IDF NLP model based on the feedback. In some implementations, the feedback can include confirming and/or denying classification of digital artifacts into a specific focus area (e.g., based on user input and/or selection), manually assigning digital artifacts to a focus area, adding additional focus areas, removing focus areas, enriching the focus areas with additional information, and/or the like. In some implementations, the focus areas can change based on the feedback (e.g., from the user input).

At 310, the method 300 includes calculating, for each focus area from the plurality of focus areas and based on the level of association of each digital artifact with that focus area, an engagement score for the user. In some implementations, the engagement score can be used to further train the reinforcement learning model. For example, the engagement score can be used to train the reinforcement learning model on user behaviors that can affect the overall strategy of the entity. In some implementations, the updated reinforcement learning model can be used to generate a new engagement plan. In some implementations, 310 includes calculating an engagement score for a plurality of users.

At 312, the method 300 includes comparing the engagement score for the user to the engagement plan for the user to identify inconsistencies between the engagement score and the engagement plan. At 314, the method 300 includes defining, based on the inconsistencies, specific actions for the user to reduce the inconsistencies. In some implementations, at 314, the method 300 can determine a plurality of recommended actions for one or more users. At 316, the method 300 includes sending a signal to a compute device of the user to implement the specific actions. In some embodiments, the user can review the specific actions and accept or deny the specific actions based on a personal review. In some embodiments, the user can review the specific actions and provide feedback. In some implementations, where the user is a first user, the sending the signal includes sending the signal to the compute device such that a meeting is automatically scheduled between the first user and a second user based on an availability of the first user and the second user.

Referring generally to FIGS. 4-5, various interfaces are shown. The interfaces (400, 500) show information to the user associated with the function of a system such as the system 10 of FIG. 1. The interfaces (400, 500) can be displayed on displays (e.g., structurally and/or functionally similar to the display 136 of FIG. 1) of a user compute device (e.g., structurally and/or functionally similar to the user compute device(s) 130 of FIG. 1). The interfaces shown in FIGS. 4-5 are examples and can be reconfigured for display on other devices or can communicate information to a user in a different format.

FIG. 4 shows an example graphical interface 400 of system that generates alerts and triggers, according to an embodiment. The interface 400 can be executed and/or presented by a server (e.g., system 100 of FIG. 1) accessed by a user compute device of a user or a group of users (e.g., user compute device 130 of FIG. 1). The interface 400 includes an entity interface 402. The entity interface 402 can include, in some implementations, information associated with an overall strategy of an entity and how a user or a group of users relates to the strategy. The entity interface 400 can include multiple interactive portions displaying entity information such as a purpose portion 404, an execution portion 406, and a commitment portion 408. The purpose portion 404 can include information regarding a user's relationship to an overall strategy of an entity as well as any changes (e.g., triggers) to the overall strategy that may affect the user. The execution portion 406 can include information regarding what activities (e.g., engagements) the user has completed in the past. In some implementations, the execution portion 406 can include information regarding future deadlines, overdue deadlines, deadline management, and/or the like. The commitment portion 408 can include information regarding commitments to engagements (e.g., tasks, teams, deadlines, schedules, etc.). The commitments can be used to determine a capacity and determine whether additional tasks can be handled by the user or should be delegated.

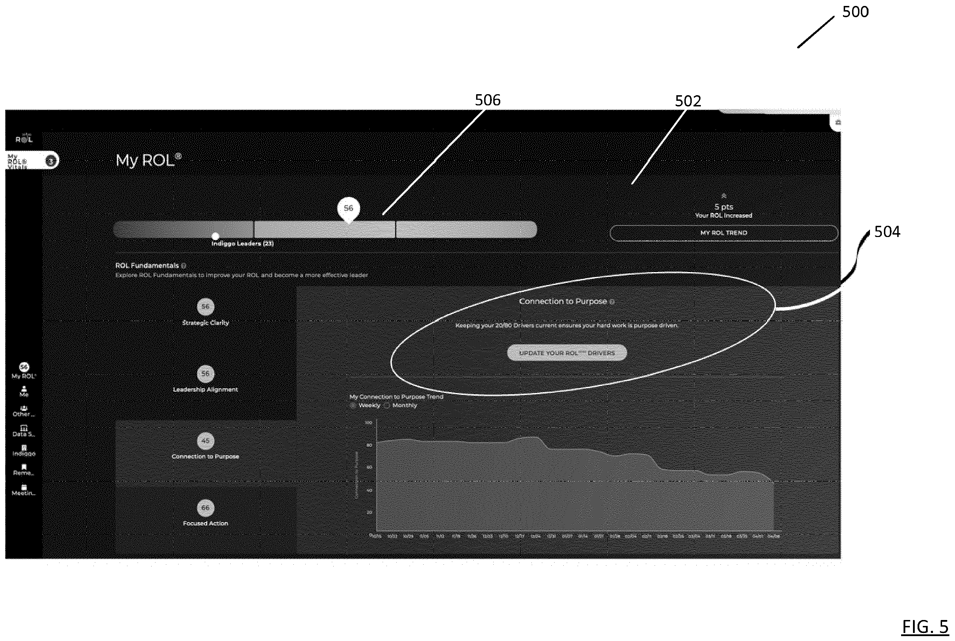

FIG. 5 shows an example of a personalized recommend action interface 500, according to an embodiment. The interface 500 can be executed and/or presented by a server (e.g., system 100 of FIG. 1) and accessed by a user compute device of a user or a group of users (e.g., user compute device 130 of FIG. 1). The interface 500 includes a user interface 502 which includes metrics related to the performance of the user or group of users. The interface 500 includes an engagement metric 506 and a recommendation window 504. The engagement metric 506 can include a slider that communicates inconsistencies between an engagement score and an engagement plan. The engagement metric 506 can indicate how efficient, how profitable, how engaged and/or the like, the user is to the entity. The recommendation window 504 can display recommended actions produced by the system (e.g., structurally and/or functionally similar to the system 100 of FIG. 1). If executed, the recommended actions in the recommendation window 504 can increase the engagement metric 506. In some implementations, the recommended actions can include an action button that accepts the recommended action. For example, if the recommend action is additional meetings for a certain focus area, the action button can automatically add additional meetings to a calendar or can add "schedule meetings" to a to-do list of the user.

Leaders, managers, and knowledge workers in organizations are responsible for planning and executing a multitude of strategies, goals, initiatives, projects, actions, and tasks. All these activities are not of the same value. Research shows that knowledge workers waste an average of 41% of their time on activities that don't add value for the organization. The Pareto principle demonstrates that approximately 20% what we focus on generates approximately 80% of the value we create. Research also shows that we can recuperate a minimum of 25% to 40% of this wasted effort back, which can then be redeployed to focus on essential, value creating activities. Depending upon the context, these numbers may vary slightly, however the essential proposition is that a minority set of what we do has a disproportionate impact and generates a majority of the associated value.

Although the Pareto Principle is a well-known theory, it is extremely challenging to implement at work, even for a single person, even harder to maintain as an ongoing habit, and until now was impossible to implement and maintain at scale across a multitude of people. It was also impossible to implement in an agile manner at scale. Value itself is a multi-faceted aspect. Lastly, it has historically been extremely difficult to assess the Pareto Principle, or to apply any relevant metrics in a standardized manner. Despite the general realization and awareness of the Pareto principle, it is often very challenging for people to use a shared and objective approach to identifying the most valuable areas to focus on and then to consistently take focused action on those most valuable areas, to maximize the value they individually and collectively generate. Action at work is also interdependent, inter-related, and cannot be effective if done in isolation. It is critical to be able to leverage a shared framework, and to be able to give people a way to get this done, both individually and collectively - as part of an ongoing, shared framework, methodology and new way of working. Given the huge scale and complexity of organizations and their strategy and initiatives, it is extremely challenging to invent a user-friendly pathway and framework that allows people to work in this new, focused and streamlined way individually and together. It is also extremely challenging to maintain new habits and ways of doing things - both individually and collectively. Strategic groupings of actions can lead to higher value extraction.

In some embodiments, a system and method can quantify and increase value generated from leadership actions using tools and metrics that measure and promote the four fundamentals of leadership effectiveness, namely: connection to purpose, strategic clarity, leadership alignment and focused action. Without loss of generality, the collection of framework, the system and metrics are referred to a Return on Leadership^{™}.

In some embodiments, a system and method can help individuals and groups to identify principal areas of individual and collective focus quickly and logically at any given time that will generate the highest individual and collective value for them in their role and for their organization, with the former and the latter being in alignment. As used herein, an area of focus may be understood as a logical grouping of leadership activities or actions collectively representing one or more related areas of focus.

In some embodiments, a system and method can automatically classify each action from an array of leadership actions into one or more areas of focus/drivers of value. The automatic classification is performed using a mathematical model that measures quantitative vector matches between vectors of attributes of each action with vectors of attributes of each area of focus.

In some embodiments, a system and method can measure a level of fulfillment of commitment to each area of focus by combining the vector matches of individual choices, activities, and actions of individual people.

In some embodiments, a system and method can continuously track, measure, and predict how well they are set up for the achievement of shared and individual areas of focus, generated by analytically aggregating levels of commitment to and fulfillment of areas of focus of individual leaders.

In some embodiments, a system and method can automatically identify opportunities for increasing value generation through reconfiguring vectors of leadership action within the constraints of available time resources.

In some embodiments, a system and method can create tailored forward looking, real-time and historical insights and messages that trigger individuals and groups to leverage opportunities of value capture by reconfiguring vectors of possible leadership choices and actions within the constraints of available time resources and within the greater framework of organizational, business unit and team level priorities.

In some embodiments, a system and method can generate and deploy tailored individual and collective insights and nudges to the leaders through a variety of communication and collaboration channels including but not limited to the leadership platform, digital or print messages, webpages, other software programs, and voice messages.

In some embodiments, a system and method can set aside or allocate resources including time, money and materials toward focus areas weighted by their respective values.

In some embodiments, a system and method can enable collective efforts of a plurality of individual leaders to drive progress toward organizational focus areas based on the respective values.

In some embodiments, a system and method can include brainstorming with and helping individuals and groups identify the most important focus areas from a plurality of focus areas on a regular basis, for the entire organization or for subgroups within the organization.

In some embodiments, a system and method can enable individuals and collections of individuals and groups to commit capacity to the most critical focus areas identified on the basis of potential value generated.

In some embodiments, a system and method can support an individual or group's daily workflow that is directed at maintaining on-going focus on dynamic top focus areas on the basis of potential value generated.

In some embodiments, a system and method can support an individual or group's workflow to automate aligning their specific focus areas with those of their supervisors, teams, or peers within the organization.

In some embodiments, a system and method can support the collective workflow of a plurality of individuals, to create focus on specific individualized focus areas on the basis of potential value generated.

In some embodiments, a system and method can adaptively and automatically drive individual action to adapt focus areas to support the agile execution of collective focus within an organization.

In some embodiments, a system and method can link focus areas on the basis of weights to resource management frameworks such as digital calendars, scheduling platforms, collaboration platforms and communication platforms.

In some embodiments, a system and method can be used to extract information resident in scheduling frameworks, communication frameworks and other frameworks that support resource allocation and link these data elements to individual and collective focus areas on the basis of their potential value.

In some embodiments, a system and method can continually provide real-time information and predictive and historical insights, to provide organizations with a clearer understanding of their value-based set up for execution effectiveness and the potentials of risk of failure.

In some embodiments, a system and method can deliver individualized and collective messages tailored to individuals. The tailoring can be to trigger desired sets of actions to drive focus toward specific value-based focus areas.

In some embodiments, a system and method can derive specific quantitative measurements that represent the level of setup readiness for achievement of the overall potential value to be generated through individual and collective focus on focus areas.

In some embodiments, a system and method can drive individuals toward choosing activities that increase their action on specific focus areas in the flow of work, e.g., on the basis of potential value generated.

In some embodiments, a system and method can automatically set aside and protect resources such as time, money, and materials, toward future allocation to focus areas on the basis of potential value generated.

In some embodiments, a system and method can support individuals and groups of individuals to commit resources upfront. Such resources can include time, money and/or materials toward specific focus areas on the basis of their potential value.

In some embodiments, a system and method can constantly or repeatedly assess and report the efficacy/fulfillment of commitment of future allocation of resources such as time, money, and materials toward specific focus areas based on value generated.

In some embodiments, a system and method can assess the current status of a future commitment of allocation of collective resources such as time, money, and materials toward focus areas on the basis of their potential value generated.

In some embodiments, a system and method can give organizational leaders and managers the ability to automatically communicate with other individuals automatically linked to the focus area in the system, to refocus individual action on specific focus areas on the basis of potential value generated.

In some embodiments, a system and method can automatically drive strategic interactions such as conversations and engagements among individuals, to drive focus on focus areas, on the basis of potential value generated.

In some embodiments, a method includes defining, using a reinforcement learning model trained to increase a reward specific to an overall strategy of an entity, an engagement plan for a user, the engagement plan for the user specific to past engagement of the user with the entity. The method further includes receiving engagement data from a plurality of digital artifacts associated with the user. The method further includes providing the engagement data from each digital artifact from the plurality of digital artifacts as an input to a term frequency - inverse document frequency (TF-IDF) natural language processing (NLP) model specific to the user to identify a context associated with each term from a plurality of terms in the engagement data. The method further includes assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas. The method further includes calculating, for each focus area from the plurality of focus areas and based on the level of association of each digital artifact with that focus area, an engagement score for the user. The method further includes comparing the engagement score for the user to the engagement plan for the user to identify inconsistencies between the engagement score and the engagement plan. The method further includes defining, based on the inconsistencies, a specific action for the user to reduce the inconsistencies. The method further includes sending a signal to a compute device of the user to implement the specific action.

In some implementations, the plurality of digital artifacts includes at least one of an email message, a calendar appointment, a document, a text message, or a report.

In some implementations, the method further includes further training the reinforcement learning model based on the engagement score for the user.

In some implementations, the TF-IDF NLP model is trained using a corpus specific to the user.

In some implementations, the method further includes receiving, from the user, feedback regarding the focus area score for each digital artifact from the plurality of digital artifacts and training the TF-IDF NLP model based on the feedback.

In some implementations, the user is a first user, the sending the signal includes sending the signal to the compute device such that a meeting is automatically scheduled between the first user and a second user based on an availability of the first user and the second user.

In some implementations, the method includes receiving an indication of an updated overall strategy of the entity, further training the reinforcement learning model based on the updated overall strategy of the entity to define an updated reinforcement learning model, and defining, using the updated reinforcement learning model, an updated engagement plan for the user such that the updated engagement plan supports the updated overall strategy of the entity.

In some implementations, the TF-IDF NLP model uses word embedding to identify related terms of the plurality of terms in the engagement data, the context of each term from the plurality of terms being defined using each term from the plurality of terms and the related terms of that term.

In some embodiments, a non-transitory processor-readable medium storing code representing instructions to be executed by one or more processors. The instructions including code to cause the one or more processors to define, using a reinforcement learning model trained to increase a reward specific to an overall strategy of an entity, an engagement plan for each user from a plurality of users associated with the entity, the engagement plan for each user from the plurality of users defined to collectively support the overall strategy. The instructions further including code to cause the one or more processors to receive engagement data from a plurality of digital artifacts associated with each user from the plurality of users. The instructions further including code to cause the one or more processors to provide the engagement data associated with each user from the plurality of users to a different machine learning model from a plurality of machine learning models to identify a context associated with each term from a plurality of terms in the engagement data for that user, each machine learning model from the plurality of machine learning models being specific to a different user from the plurality of users. The instructions further including code to cause the one or more processors to assign for each user from the plurality of users a focus area score for each digital artifact from the plurality of digital artifacts associated with that user and based on the context associated with each term associated with that digital artifact for that user, the focus area score for each digital artifact from the plurality of digital artifacts indicating a level of association of that digital artifact with each focus area from a plurality of focus areas. The instructions further including code to cause the one or more processors to calculate, for each focus area from the plurality of focus areas and based on the level of association of each digital artifact with that focus area for that user, an engagement score for each user from the plurality of users. The instructions further including code to cause the one or more processors to compare the engagement score for each user from the plurality of users to the engagement plan for that user to identify inconsistencies between the engagement score for that user and the engagement plan for that user. The instructions further including code to cause the one or more processors to further train the reinforcement learning model based on the engagement score for each user from the plurality of users and the inconsistencies between the engagement score for each user from the plurality of users and the engagement plan for that user to define an updated reinforcement learning model. The instructions further including code to cause the one or more processors to redefine, using the updated reinforcement learning model, the engagement plan for each user from the plurality of users associated with the entity.

In some implementations, the instructions further include code to cause the one or more processors to define, based on the inconsistencies between the engagement score for a user from the plurality of users and the engagement plan for the user, a specific action for the user to reduce the inconsistencies between the engagement score for the user and the engagement plan for the user, and send a signal to a compute device of the user to implement the specific action.

In some implementations, each machine learning model from the plurality of machine learning models is a term frequency - inverse document frequency (TF-IDF) natural language processing (NLP) model specific to a user from the plurality of users.

In some implementations, the plurality of digital artifacts includes at least one of an email message, a calendar appointment, a document, a text message, or a report.

In some implementations, the instructions further include code to cause the one or more processors to receive from a user from the plurality of users, feedback regarding the focus area score for each digital artifact from the plurality of digital artifacts associated with the user and train the machine learning model from the plurality of machine learning models and associated with the user based on the feedback.

In some implementations, each machine learning model from the plurality of machine learning models is a term frequency - inverse document frequency (TF-IDF) natural language processing (NLP) model specific to a different user from the plurality of users.

In some embodiments, a method includes defining, based on a first machine learning model, an engagement plan for a user associated with an entity, the engagement plan for the user configured to, collectively with engagement plans for a plurality of other users associated with the entity, support an overall strategy of the entity. The method further includes receiving engagement data from a plurality of digital artifacts associated with the user. The method further includes providing the engagement data from each digital artifact from the plurality of digital artifacts as an input to a second machine learning model specific to the user to identify a context associated with each term from a plurality of terms in the engagement data. The method further includes assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas. The method further includes calculating, for each focus area from the plurality of focus areas and based on the level of association of each digital artifact with that focus area, an engagement score for the user. The method further includes comparing the engagement score for the user to the engagement plan for the user to identify inconsistencies between the engagement score and the engagement plan. The method further includes receiving an indication of an updated overall strategy of the entity. The method further includes further training the first machine learning model based on the updated overall strategy of the entity and the inconsistencies to define an updated first machine learning model. The method further includes defining, using the updated first machine learning model, an updated engagement plan for the user such that the updated engagement plan is configured to, collectively with updated engagement plans for the plurality of other users, support the updated overall strategy of the entity.

In some implementations, the method further includes defining, based on the inconsistencies, a specific action for the user to reduce the inconsistencies, and sending a signal to a compute device of the user to implement the specific action.

In some implementations, wherein the engagement plan for the user is specific to past engagement of the user with the entity.

In some implementations, the first machine learning model is a reinforcement learning model.

In some implementations, the second machine learning model is a term frequency - inverse document frequency (TF-IDF) natural language processing (NLP) model.

In some implementations, the plurality of digital artifacts includes at least one of an email message, a calendar appointment, a document, a text message, or a report.

It should be understood that the disclosed embodiments are not intended to be exhaustive, and functional, logical, operational, organizational, structural and/or topological modifications can be made without departing from the scope of the disclosure. As such, all examples and/or embodiments are deemed to be non-limiting throughout this disclosure.

All definitions, as defined and used herein, should be understood to control over dictionary definitions, definitions in documents incorporated by reference, and/or ordinary meanings of the defined terms.

Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features can not necessarily be limited to a particular order of execution, but rather, any number of threads, processes, services, servers, and/or the like that can execute serially, asynchronously, concurrently, in parallel, simultaneously, synchronously, and/or the like in a manner consistent with the disclosure. As such, some of these features can be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

Some embodiments described herein relate to a computer storage product with a non-transitory computer-readable medium (also can be referred to as a non-transitory processor-readable medium) having instructions or computer code thereon for performing various computerimplemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) can be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules can include, for example, a processor, a field programmable gate array (FPGA), and/or an application specific integrated circuit (ASIC). Software modules (executed on hardware) can include instructions stored in a memory that is operably coupled to a processor and can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

## Claims

1. A method, comprising:
defining, using a reinforcement learning model trained to increase a reward specific to an overall strategy of an entity, an engagement plan for a user, the engagement plan for the user specific to past engagement of the user with the entity;
receiving engagement data from a plurality of digital artifacts associated with the user;
providing the engagement data from each digital artifact from the plurality of digital artifacts as an input to a term frequency - inverse document frequency (TF-IDF) natural language processing (NLP) model specific to the user to identify a context associated with each term from a plurality of terms in the engagement data;
assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas;
calculating, for each focus area from the plurality of focus areas and based on the level of association of each digital artifact with that focus area, an engagement score for the user;
comparing the engagement score for the user to the engagement plan for the user to identify inconsistencies between the engagement score and the engagement plan;
defining, based on the inconsistencies, a specific action for the user to reduce the inconsistencies; and
sending a signal to a compute device of the user to implement the specific action.

2. The method of claim 1, wherein the plurality of digital artifacts includes at least one of an email message, a calendar appointment, a document, a text message or a report.

3. The method of claim 1 or claim 2, further comprising:
further training the reinforcement learning model based on the engagement score for the user.

4. The method of any of the preceding claims, wherein the TF-IDF NLP model is trained using a corpus specific to the user.

5. The method of any of the preceding claims, further comprising:
receiving, from the user, feedback regarding the focus area score for each digital artifact from the plurality of digital artifacts; and
training the TF-IDF NLP model based on the feedback.

6. The method of any of the preceding claims, wherein the user is a first user, the sending the signal includes sending the signal to the compute device such that a meeting is automatically scheduled between the first user and a second user based on an availability of the first user and the second user.

7. The method of any of the preceding claims, further comprising:
receiving an indication of an updated overall strategy of the entity;
further training the reinforcement learning model based on the updated overall strategy of the entity to define an updated reinforcement learning model; and
defining, using the updated reinforcement learning model, an updated engagement plan for the user such that the updated engagement plan supports the updated overall strategy of the entity.

8. The method of any of the preceding claims, wherein the TF-IDF NLP model uses word embedding to identify related terms of the plurality of terms in the engagement data, the context of each term from the plurality of terms being defined using each term from the plurality of terms and the related terms of that term.

9. A non-transitory processor-readable medium storing code representing instructions to be executed by one or more processors, the instructions comprising code to cause the one or more processors to:
define, using a reinforcement learning model trained to increase a reward specific to an overall strategy of an entity, an engagement plan for each user from a plurality of users associated with the entity, the engagement plan for each user from the plurality of users defined to collectively support the overall strategy;
receive engagement data from a plurality of digital artifacts associated with each user from the plurality of users;
provide the engagement data associated with each user from the plurality of users to a different machine learning model from a plurality of machine learning models to identify a context associated with each term from a plurality of terms in the engagement data for that user, each machine learning model from the plurality of machine learning models being specific to a different user from the plurality of users;
assign for each user from the plurality of users a focus area score for each digital artifact from the plurality of digital artifacts associated with that user and based on the context associated with each term associated with that digital artifact for that user, the focus area score for each digital artifact from the plurality of digital artifacts indicating a level of association of that digital artifact with each focus area from a plurality of focus areas;
calculate, for each focus area from the plurality of focus areas and based on the level of association of each digital artifact with that focus area for that user, an engagement score for each user from the plurality of users;
compare the engagement score for each user from the plurality of users to the engagement plan for that user to identify inconsistencies between the engagement score for that user and the engagement plan for that user;
further train the reinforcement learning model based on the engagement score for each user from the plurality of users and the inconsistencies between the engagement score for each user from the plurality of users and the engagement plan for that user to define an updated reinforcement learning model; and
redefine, using the updated reinforcement learning model, the engagement plan for each user from the plurality of users associated with the entity.

10. The non-transitory processor-readable medium of claim 9, wherein the instructions further comprise code to cause the one or more processors to:
define, based on the inconsistencies between the engagement score for a user from the plurality of users and the engagement plan for the user, a specific action for the user to reduce the inconsistencies between the engagement score for the user and the engagement plan for the user; and
send a signal to a compute device of the user to implement the specific action.

11. The non-transitory processor-readable medium of claim 9 or claim 10, wherein each machine learning model from the plurality of machine learning models is a term frequency - inverse document frequency (TF-IDF) natural language processing (NLP) model specific to a user from the plurality of users.

12. The non-transitory processor-readable medium of any of claims 9 to 11, wherein the plurality of digital artifacts includes at least one of an email message, a calendar appointment, a document, a text message or a report.

13. The non-transitory processor-readable medium of any of claims 9 to 12, wherein the instructions further comprise code to cause the one or more processors to:
receive, from a user from the plurality of users, feedback regarding the focus area score for each digital artifact from the plurality of digital artifacts associated with the user; and
train the machine learning model from the plurality of machine learning models and associated with the user based on the feedback.

14. The non-transitory processor-readable medium of any of claims 9 to 13, wherein each machine learning model from the plurality of machine learning models is a term frequency - inverse document frequency (TF-IDF) natural language processing (NLP) model specific to a different user from the plurality of users.

15. A method, comprising:
defining, based on a first machine learning model, an engagement plan for a user associated with an entity, the engagement plan for the user configured to, collectively with engagement plans for a plurality of other users associated with the entity, support an overall strategy of the entity;
receiving engagement data from a plurality of digital artifacts associated with the user;
providing the engagement data from each digital artifact from the plurality of digital artifacts as an input to a second machine learning model specific to the user to identify a context associated with each term from a plurality of terms in the engagement data;
assigning a focus area score for each digital artifact from the plurality of digital artifacts based on the context associated with each term associated with that digital artifact, the focus area score for each digital artifact from the plurality of digital artifacts indicating a level of association of that digital artifact with each focus area from a plurality of focus areas;
calculating, for each focus area from the plurality of focus areas and based on the level of association of each digital artifact with that focus area, an engagement score for the user;
comparing the engagement score for the user to the engagement plan for the user to identify inconsistencies between the engagement score and the engagement plan;
receiving an indication of an updated overall strategy of the entity;
further training the first machine learning model based on the updated overall strategy of the entity and the inconsistencies to define an updated first machine learning model; and
defining, using the updated first machine learning model, an updated engagement plan for the user such that the updated engagement plan is configured to, collectively with updated engagement plans for the plurality of other users, support the updated overall strategy of the entity.

16. The method of claim 15, further comprising:
defining, based on the inconsistencies, a specific action for the user to reduce the inconsistencies; and
sending a signal to a compute device of the user to implement the specific action.

17. The method of claim 15 or claim 16, wherein the engagement plan for the user is specific to past engagement of the user with the entity.

18. The method of any of claims 15 to 17, wherein the first machine learning model is a reinforcement learning model.

19. The method of any of claims 15 to 18, wherein the second machine learning model is a term frequency - inverse document frequency (TF-IDF) natural language processing (NLP) model.

20. The method of any of claims 15 to 19, wherein the plurality of digital artifacts includes at least one of an email message, a calendar appointment, a document, a text message or a report.
